# EUROPEAN PATENT SPECIFICATION

(11) **EP 3 458 507 B1**
(45) Date of publication and mention of the grant of the patent: **23.06.2021**
(21) Application number: 17737040.0
(22) Date of filing: 18.05.2017
(51) Int. Cl.: C08J 11/04

(54) **PROCESS FOR RECYCLING A WASTE THERMOPLASTIC POLYMERIC MATERIAL**
RECYCLING-VERFAHREN FÜR THERMOPLASTISCHEN POLYMERABFALLSTOFFE
PROCÉDÉ DE RECYCLAGE D'UN MATÉRIAU POLYMÈRE THERMOPLASTIQUE RÉSIDUAIRE

(30) Priority: 19.05.2016 IT UA20163597
(43) Date of publication of application: 27.03.2019
(73) Proprietor: Kingfisher Polymers S.r.l., 20015 Parabiago (MI) (IT)
(72) Inventor: PERFETTI, Giancarlo, 20015 Parabiago (MI) (IT)
(74) Representative: Bottero, Carlo
(86) International application number: PCT/IB2017/052942
(87) International publication number: WO 2017/199202

(56) References cited:
- WO-A1-93/24546
- WO-A1-2007/068656
- CN-A- 102 382 351
- US-A1- 2008 227 876

## Description

The present invention relates to a process for recycling a waste thermoplastic polymeric material, obtained in particular from the treatment of urban or industrial waste, in order to obtain improved mechanical properties, impact resistance and melt resistance of the recycled material.

Besides benefits that plastic products have brought to society in terms of economic activity, jobs and quality of life, plastic waste is becoming a challenging issue more and more every day.

There are various ways to deal with plastic waste, including recycling, disposal and incineration with or without energy recovery.

According to international standards, current recycling processes could be divided in four value-decreasing steps: primary recycling (closed loop from post-industrial waste), secondary recycling (downgrading by mechanical recycling), tertiary recycling (transforming feedstock recycling into chemicals or fuels) and quaternary recycling (valorization by combustion and energy recovery).

To date, upgrading of plastic waste by chemical modification is still to be explored.

Industrial utilization of recycled plastics is generally easier if recycled plastic grades are close to single homogeneous material composition or at least mixtures of compatible polymeric matrices.

In particular plastic resins and grades, the presence of an incompatible polymer is beneficial to certain properties. That is the case of toughening of polymer matrices by copolymerized polybutadiene, inserted or grafted, or dispersed in particles.

Post-consumer and post-industrial recycled polymers can come from a multitude of sources: office equipment, domestic appliances, consumer electronics, automotive shredder residue, packaging waste, household waste, scraps from plastic industry processing such as moulding and extrusion.

Plastic materials found in relatively big and rigid specific items such as domestic appliances, office automation equipment, consumer electronics and automotive shredder residue are normally recovered in an easier way, thanks to special collection methods. Other easily separated plastic waste items are bottles, jugs, rigid containers and trays made of PET, HDPE and PP.

Generally a preliminary human check or manual selection is followed by different automatic sorting methods like X-ray fluorescence, NIR and/or flotation in air, water or other fluids.

Resulting recycled plastic grades are quite clean and homogeneous and often exhibit good performances or could be improved by various means.

US8450382-B2 is mainly focused on this types of waste streams and describes various polymer compositions. Recycled polymer properties are improved basically by physical mixing with secondary or tertiary polymers. This method has some limitations because it does not deal with the treatment of household plastic waste as a whole and it does not disclose a method for improving general polyethylene based materials. Moreover, adding secondary or tertiary polymers to the main polymer matrix poses serious problems to further recyclability of the materials produced with this process.

Other physical mixing methods of improving polyolefin properties are considered in the following prior art.

CA2438373-A1 describes the addition of organically modified clays in polyolefin grades in order to obtain higher melt strength and thus better performances in stretching and thermoforming process operations in the molten state. This method is not dealing with post-consumer waste or recycled materials. Moreover, organically modified clays could be very expensive and leading to not competitive materials in the recycled plastics market.

WO2012/009005-A1 presents a method for incorporating residues from sewer sludge treatment (fly ashes) into recycled HDPE or PP matrix and produce semi-finished or finished parts as extruded profiles or cylinders. Although this process try to give a solution to fly ashes disposal, final applications are very limited and recycled polymers are downgraded to low value added products.

Generally physical mixing methods for improving polyolefins imply the addition of something extraneous to the original polymer matrix and thus make further recycling sometimes harder or even impossible.

Roth et al. in WO01/92397-A1 patent present a method for the molecular weight modification of thermoplastic polymers. The process employs alkoxyamines as free radical initiators and polyunsaturated functional compounds. An effective way of increasing the molecular weight is described in order to improve tensile resistance and impact properties of compositions not containing halogenated polymers. Recycled plastics from post-consumer and post-industrial plastic waste are not mentioned: in these waste streams, even if selected, halogen-containing polymers (e.g. PVC, usually present in an amount up to 1-5%) and other halogen-containing compounds (such as bromine or residues of halogen-containing flame retardant additives up to 0.5-1%) could be present.

US 2008/0227876-A1 describes a method in which the thermoplastic waste undergoes to a solid-state grafting process, contemporaneously to a grinding process to obtain finer particles. The authors maintain that solid-phase grafting should be preferred to melt-phase grafting because of lesser polymer decomposition and reduced impairing of properties.

Further attempts to improve the properties of thermoplastic polymers, in particular of polyolefins, were carried out using a combination of chemical modification together with a physical mixing with reinforcing fillers.

WO2007/068656-A1 discloses a process that, in one or preferably more mixing steps, incorporates nano-clays to enhance recycled polyolefin properties. The author underlines that it would be impossible to achieve a molecular weight increase of the recycled polyolefin by adding any type of component, after the molecular weight decrease due to ageing and recycling operations.

End-of-life packaging waste is composed by several polymer types, but mainly by polyolefins (LDPE, HDPE and PP), PS and PET. Except bottles, jugs, rigid containers and trays, the rest of this plastic waste is hardly sold as recycled polymer because of heterogeneity and very poor properties.

The most widespread options for recycling this waste stream are thermal recovery or, in the best case, as secondary reduction agent by substituting coke in cast iron production.

There is therefore a need for a method of improving general properties of recycled polyolefins coming from post-consumer waste that is economically viable, does not use fillers or fibers in order to facilitate further recycling at the end of application and leads to materials that could substitute virgin polymers in high value applications.

The grafting of maleic anhydride (MAH) on polyolefins is known since many years. It is an effective method to improve adhesion of polyolefins to metals, glass fibers and other polymers. K.J. Ganzeveld et al. [Polymer Engineering Science, 30, 1529, (1990)] described a possible reaction mechanism between PE and MAH, as reported hereinbelow:
**1)** 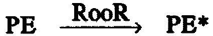
**2) PE* + MAH → PE-MAH* followed by 7, 10, 11 or 13**
**3)** 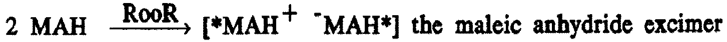
**4) PE + [*MAH^{+ -}MAH*] → PE* + [MAH^{+ -}MAH*]**
**5) PE* + [*MAH^{+ -}MAH*] → PE-MAH^{+ -}MAH***
**6) PE-MAH^{+ -}MAH* → PE-MAH^{∗} + [*MAH*]^{*}**
**7)** 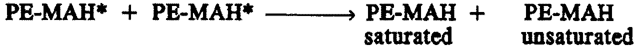
**8) [*MAH*]^{*} + MAH → [*MAH^{+ -}MAR*]**
**9)** 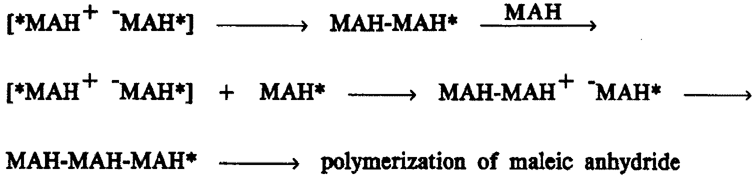
**10)** 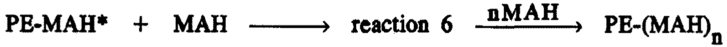
**11) PE-MAH^{∗} + PE** → **PE-MAH +** PE*
**12) PE* + nMAH*** → **PE-(MAH)ₙ**
**13) PE-MAH^{∗}** + **PE*** → **PE-MAH-PE main crosslinking (9)**
**14) PE*** + **PE*** → **PE-PE crosslinking**
(wherein ROOR is a peroxide, free radical generator).

It is commonly accepted that, even in the case of reaction between pure HDPE and pure MAH, the mechanism of grafting reaction is very complex and still not completely clear. No reaction scheme is known to date about a complex mixture consisting of a polyolefin-based primary polymer, one or more secondary polymers and residual additives that may be all involved in chemical reactions.

In US 5945492 it is mentioned a method of grafting functional monomers like unsaturated carboxylic acid anhydrides in the presence of a substance which inhibits or reduces the increase or the decrease of the molecular weight of the treated polymer. This substance is a stable nitroxide radical and the aim of that invention is that of grafting maleic anhydride without changing molecular weight of the polyolefin (PE or PP) or other polymers.

In the prior art the need is thus felt of providing a method for improving melt strength and mechanical properties of thermoplastic materials coming from post-consumer and post-industrial polyolefin-rich waste compounds by means of chemical modification, even in the case said materials contain halogen-containing polymers or halogen-containing residual additives. Differently from what is described by aforementioned patent US 5945492, one of the aims of the present invention is to obtain higher molecular weights and consequently to change polymer properties.

This aim, and others that will be described more in detail hereafter, is reached in an advantageous manner by reacting waste thermoplastic polymers with an organic compound having one or more carbon-carbon double bonds, in the presence of a free radical initiator, as described hereinbelow.

In such a way, it has been surprisingly found that the molecular weight increase of the recycled polymers can be easily obtained and controlled by predetermined amounts and relative ratios of mono- or poly-unsaturated functional components and free radical initiators.

Even more surprisingly, the resulting performances in some cases are more than doubled with respect to the initial ones and perfectly in line with standard virgin polymers correspondent grades.

The present invention relates to a process for recycling a thermoplastic polymeric waste material by reacting said thermoplastic polymeric waste material in a molten state with an organic compound having one or more carbon-carbon double bonds in the presence of a free radical initiator; wherein the waste thermoplastic polymer material comprises a primary polymer, one or more secondary polymers and residual additives in which:
the primary polymer is present in an amount from 50% by weight to 99.9% in weight;
said one or more secondary polymers are present in an amount from 0.1% by weight to 50% in weight;
the residual additives are present in an amount from 0.1 ppm (parts per million) to 10% by weight;
the percentages by weight being expressed with respect to the total weight of the primary and secondary polymers;
wherein the primary polymer is selected from monoolefin and/or diolefin polymers;
wherein said one or more secondary polymers optionally comprise crosslinked polymer materials in an amount not greater than 15%;
wherein the organic compound having one or more carbon-carbon double bonds is added to the waste thermoplastic polymer material in an amount from 0.01% to 10% by weight, with respect to the weight of the polymeric material to be treated.

Differently from what suggested for instance in US 2008/0227876-A1, we have surprisingly found that the reaction in a molten phase provides a general improvement in the material properties.

The present invention is intended for the improvement of post-consumer and post-industrial plastic waste. As known, the target of selection and sorting operations, in order to recycle the plastic waste, is to obtain pure single-polymer waste streams. In practical terms this target is almost never achieved because it is highly uneconomic. Moreover, polymers undergo to detrimental modifications due to ageing and oxidation. In addition to this, it is worth mentioning that virgin polymers, when are initially processed and transformed, are very often mixed with pigments, fillers and other additives such as antioxidants and UV stabilizers. The same residual additives can be found, at least in part or modified in the plastic compositions to be recycled.

The post-consumer or post-industrial waste after selection and sorting intrinsically contain one or more additional components together with the primary polymer. Therefore, in the context of the present invention, the waste thermoplastic polymer material comprises a primary polymer, one or more secondary polymers and residual additives in which:
the primary polymer is present in an amount from 50% by weight to 99.9% in weight;
said one or more secondary polymers are present in an amount from 0.1% by weight to 50% in weight;
the residual additives are present in an amount from 0.1 ppm (parts per million) to 10% by weight;
the percentages by weight being expressed with respect to the total weight of the primary and secondary polymers.

The primary polymer is selected from monoolefin and/or diolefin polymers, belonging particularly to the following product class:
(A) Monoolefin and/or diolefin polymers, such as: polyethylene, polypropylene, polyisobutene, polybut-1-ene, poly-4-methylpentene, polyvinylcyclohexane, polyisoprene, polybutadiene. In particular, the polyethylene may be selected from: high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), very low and ultra-low density polyethylene (VLDPE and ULDPE). The monoolefin and/or diolefin polymers may be homopolymers or copolymers, in particular copolymers of ethylene with C₃-C₁₂ alpha-olefins, or copolymers of propylene with ethylene and/or C₄-C₁₂ alpha-olefins. C₄-C₁₂ alpha-olefins can be selected for example from: 1-butene, isobutylene, 1-hexene, 1-heptene, 1-octene, 1-methylpentene. Other comonomers of ethylene and/or propylene may be cycloaliphatic olefins, such as norbornene, vinylcyclohexene. Other copolymers are the copolymers of ethylene with an ester containing at least one ethylenic unsaturation, such as, for example: ethylene/alkyl acrylate copolymers, ethylene/ alkylmethacrylate, ethylene/vinylacetate, ethylene/ acrylic acid or ethylene/methacrylic acid, or salts thereof.
   The different classes of primary polymers mentioned above are generally present as a blend in the materials obtained from post-consumer or post-industrial recycle processes. They can also be found in the material to be treated after being subjected, at least partially, to processes of ageing, oxidation, stress corrosion cracking and/or environmental stress cracking.
   Preferably, the primary polymers are present in an amount from 55% by weight to 95% by weight, even more preferably from 65% by weight to 90% by weight, with respect to the total weight of the primary and secondary polymers.
   As regards the secondary polymers, they may be of the same nature of the above mentioned primary polymers or, for instance, may be selected from the following product classes:
(B) Aromatic homopolymers or copolymers obtained from the polymerization of vinylaromatic monomers, such as, for example: styrene, alpha-methylstyrene, vinyltoluene, ethylstyrene, propylstyrene, vinylbiphenyl, vinylnaphthalene, vinyl anthracene. As comonomers may be used for example: ethylene, propylene, dienes, nitriles, ethylenically unsaturated acids, maleic anhydride, maleimides, vinylacetate, acrylic derivatives. The above-mentioned homopolymers or copolymers may also be hydrogenated (for example polycyclohexylethylene PCHE).
(C) Graft copolymers of vinyl aromatic monomers with other monomers, for example butadiene, acrylonitrile, methyl methacrylate, and other (typical example are ABS, MBS, ASA and AES polymers).
(D) Polyamides and copolyamides, derived from diamines and dicarboxylic acids and/or from aminocarboxylic acids or the corresponding lactams; for example: polyamide-4, polyamide-6, polyamide 6/6, 6/10, 6/12, 4/6, 12/12, polyamide 11, polyamide 12, aromatic polyamides obtained from m-xylene-diamine and adipic acid; polyamides obtained from hexamethylenediamine and isophthalic and/or terephthalic acid, optionally modified with an elastomer; block copolymers of the aforementioned polyamides with polyolefin, polyethers.
(E) Polyesters obtained from dicarboxylic acids and diols and/or from hydroxycarboxylic acids or the corresponding lactones, for example acids: polyethyleneterephthalate (PET), polybutyleneterephthalate (PBT), poly-1,4-dimethylcyclohexane terephthalate, polyalkylene naphthalene (PAN), polyhydroxybenzoates.
(F) Polyolefins containing halogen, in particular chlorine and/or fluorine, for example: polyvinylchloride (PVC), polyvinylidene chloride (PVDC), polyvinyl fluoride (PVF), polyvinylidene fluoride (PVDF), polytetrafluoroethylene (PTFE), ethylene-chlorotrifluoroethylene copolymers (ECTFE), and others.
(G) Polymers of alpha-beta-unsaturated acids or derivatives thereof, for example polyacrylate, polymethacrylate, polymethylmethacrylate, polyacrylamide, polyacrylonitrile, possibly modified with butyl acrylate; copolymers of the above monomers with other monomers, for example butadiene.
(H) Polymers obtained from ethylenically unsaturated alcohols or amines, or acyl derivatives or acetals thereof, for example: polyvinyl alcohol (PVA), polyvinyl acetate (PVAc), polyvinyl stearate, polyvinyl benzoate, polyvinyl maleate, polyvinyl butyral, or also copolymers thereof with alpha-olefins.
(I) Homopolymers and copolymers of cyclic ethers, for example: polyalkyleneglycols, polyethyleneoxide, polypropyleneoxide, or copolymers thereof.
(J) Polyacetals, such as polyoxymethylene, possibly modified with thermoplastic polyurethanes, acrylates or MBS.
(K) Polyphenyleneoxide or polyphenylenesulfide, possibly in admixture with styrene polymers or polyamides.
(L) Polyureas, polyimides, polyamide-imides, polyetherimides, polyesterimides.
(M) Polycarbonates and polyether carbonates.
(N) Polyketones.
(O) Polysulfones, polyether sulfones and polyether ketones.
(P) Biodegradable polymers, for example: polylactic acid (PLA), polyhydroxyalkanoates (PHA), and others.

The aforementioned classes of secondary polymers may also be crosslinked polymer materials, for instance polyethylene crosslinked by means of different methods (by radiations, siloxanes, etc.) and vulcanized elastomers. In any event, the amount of crosslinked materials in the material to be treated is low, in order to preserve the thermoplasticity of the material itself, which is necessary for the reaction in a molten state with the mono- or poly-unsaturated compound in the presence of the initiator. Such amount is not greater than 15%, more preferably not greater than 5%.

The different classes of secondary polymers as mentioned above are generally present as a blend in the materials obtained from post-consumer or post-industrial recycle processes. They can also be found in the material to be treated after being subjected, at least partially, to processes of ageing, oxidation, stress corrosion cracking and/or environmental stress cracking.

Preferably, the secondary polymers are present in an amount from 5% by weight to 45% by weight, even more preferably from 10% by weight to 35% by weight, with respect to the total weight of the primary and secondary polymers.

As regards the residual additives, they may be generally selected from those commonly used in polymeric materials to modify their properties or to impart special properties, depending on the application to which they are intended. Particularly, the residual additives may be selected from: organic or inorganic fillers, antioxidants, heat stabilizers, flame retardants, UV stabilizers, fibers and reinforcing agents, metal deactivators, impact modifiers, lubricants, phosphites and phosphates, peroxide scavengers, optical brighteners, pigments and dyes, antistatic agents, expanding agents, rheology modifiers, oxo-biodegradation modifiers, crosslinking agents, co-stabilizers, thougheners, heavy metals and heavy-metals containing compounds, halogens and halogen-containing compounds, organic matter as paper, food residues and volatile organic compounds (VOCs) at the processing temperature, and others.

Preferably, the residual additives are present in an amount from 10 ppm (parts by million) to 5% by weight, with respect to the total weight of the primary and secondary polymers.

According to a preferred embodiment, the polymeric material to be treated comprises from 80% to 95% of polyethylene, from 5% to 20% of polypropylene, and from 1 ppm to 5% of residual additives, with respect to the total weight of the primary and secondary polymers.

According to another preferred embodiment, the polymeric material to be treated comprises from 80% to 95% of polyethylene, from 5% to 20% of polypropylene, from 1 ppm to 2.5% of PVC or of halogen-containing substances, and from 1 ppm to 5% of residual additives, with respect to the total weight of the primary and secondary polymers.

The free radical initiators to be used in the process according to the present invention may be selected from: organic or inorganic peroxides, azo-bis compounds.

In particular, organic radical initiators may be selected from:
dicumyl peroxide (DCP), t-butyl-cumyl peroxide, acetyl-cicloexhansulfonyl peroxide, di-isopropyl peroxydicarbonate, tert-amyl peroxy neodecanoate, tert-butyl peroxy neodecanoate, tert-butyl perpivalate, tert-amylperpivalate, di(2,4-dichlorobenzoyl) peroxide, diisononyl peroxide, didecanoyl peroxide, dioctanoyl peroxide, dilauroyl peroxide, di(4-methylbenzoyl) peroxide, disuccinic acid peroxide, diacetyl peroxide, dibenzoyl peroxide, tert-butyl peroxy-2-ethylhexanoate, 2,5-dimethylhexan-2,5-di-benzoate, tert-butyl peroxyacetate, tert-amyl peroxybenzoate, diisopropyl peroxydicarbonate, 2,5-dimethyl-2,5-di (tert-butylperoxy) hexane (DTBPH), di-tert-amyl peroxide, di-tert-butyl peroxide , n-butyl-4,4-di(tert-butylperoxy) valerate, ethyl-3,3-di(tert-butylperoxy) butyrate, 3,3,6,6,9,9-hexamethyl-1,2,4,5-tetraoxacyclononane, diisopropylbenzene monohydroperoxide, cumene hydroperoxide, methylethylketone peroxide, tert-butyl hydroperoxide.

Particularly, azo-bis initiators may be selected from: 2,2'-azo-bis(2-methyl-butyronitrile) (AIBN), 2,2'-azo-bis(2,4-dimethylvaleronitrile), 2,2'-azo-bis(4-methoxy-2,4-dimethylvaleronitrile), 1,1'-azo-bis (1-cyclohexanecarbonitrile), 2,2'-azobis(isobutyramide) dihydrate, 2-phenylazo-2,4-dimethyl-4-methoxyvaleronitrile, dimethyl-2,2'-azobisisobutyrate, 2-(carbamoylazo)isobutyronitrile, 2,2'-azo-bis(2,4,4-trimethylpentane), 2,2'-azo-bis(2-methylpropane), 2,2'-azo-bis(N,N'-dimethylene-isobutyramide (as free base or as hydrochloride), 2,2'-azo-bis(2-amidinopropane) (as free base or as hydrochloride), 2,2'-azo-bis(2-methyl-N-[1,1-bis(hydroxymethyl)ethyl] propionamide, 2,2'-azo-bis (2-methyl-N-[1,1-bis(hydroxymethyl)-2-hydroxyethyl] propionamide.

Most of the mentioned free radical initiators are commercially available and known to the person skilled in the art. They can be used singularly or in admixture one with the other.

Preferably, the free radical initiator is added to the polymeric material to be treated in an amount from 0.03 mmol/kg to 30 mmol/kg, with respect to the total weight of the primary and secondary polymers. Said amount is more preferably from 0.17 mmol/kg to 13 mmol/kg, or even more preferably from 0.20 mmol/kg to 10 mmol/kg, with respect to the total weight of the polymeric material to be treated.

In order to simplify and improve the accuracy of free radical initiator dosage, these compounds could be used in diluted form and/or as solutions.

As regards the organic compound having one or more carbon-carbon double bonds, it can be mono-unsaturated or poly-unsaturated.

As regards the mono-unsaturated compounds, they are preferably selected from the following product classes:
(1) Carboxylic acids having from 2 to 20 carbon atoms and containing one ethylenic unsaturation, or derivatives thereof, such as esters, anhydrides, amides, imides, salts, such as for example: acrylic acid, methacrylic acid, alkylacrylates (in particular ethyl acrylate n-butyl acrylate, isobutyl acrylate, 2-ethylhexyl acrylate), alkyl methacrylates (in particular methyl methacrylate). Particularly preferred are dicarboxylic acids having from 4 to 10 carbon atoms and containing one ethylenic unsaturation, or derivatives thereof, in particular anhydrides. Examples are: maleic acid, fumaric acid, itaconic acid, citraconic acid, allyl succinic acid, cyclohex-4-ene-1,2-dicarboxylic acid, 4-methyl-cyclohex-4-ene-1,2-dicarboxylic acid, bicyclo[2,2,1]hept-5-ene-2,3-dicarboxylic acid, and anhydrides thereof.
(2) Vinyl esters of saturated carboxylic acids, for example: vinyl acetate, vinyl propionate.
(3) Unsaturated epoxy compounds, for example: glycidylesters or aliphatic glycidylethers (particularly allyl glycidylether, vinyl glycidylether, glycidyl maleate, glycidyl itaconate, glycidyl acrylate, glycidyl methacrylate); glycidylesters or alicyclic glycidylethers (in particular 2-cyclohexene-1-glycidyl ether, cyclohexene-4,5-diglycidylcarboxylate, cyclohexene-4,5-diglycidylcarboxylate, 5-norbornene-2-methyl-2-glycidyl carboxylate, endocis-bicyclo[2,2,1]-5-heptene-2,3-diglycidyl dicarboxylate).
(4) Aliphatic, aromatic or mixed aliphatic-aromatic monoolefins, optionally containing hetero-atoms, or primary or secondary functional groups such as alcohols, ketones, aldehydes, ethers, esters, amines and others. Preferably, the monoolefins have from 3 to 30 carbon atoms and may be selected from: propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene, 1-docosene.

As regards the poly-unsaturated compounds, they have at least two carbon-carbon double bonds, conjugated or non-conjugated. They can be in the form of oligomers or polymers, which can be obtained by polymerization of aliphatic or aromatic diene monomers. Examples of such class are polyisoprene, polychloroprene, polybutadiene and all the copolymers obtainable by copolymerization with other monomers. Some typical copolymers are for example poly(acrylonitrile-co-butadiene) and poly(isoprene-co-butadiene). Monomers, co-monomers and diene monomers can have other carbon-carbon double bonds as groups pendant from the main chain. Some polymers and oligomers belonging to such type are for example polyallylic polymers, polyunsaturated polycarbonates, polymaleimides, polyunsaturated polyesters, polyunsaturated polyethers. One or more of these polymers or oligomers can also be present in the original polymeric matrix to be modified. In fact, very commonly polymers such as EPDM and polybutadiene are present in mixed post-consumer and post-industrial plastic waste.

Other useful compounds having two or more carbon-carbon unsaturated bonds are bismaleic and bismaleimide compounds, bis-unsaturated bisphenols and biphenyls.

In the process according to the present invention, the mono-unsaturated or poly-unsaturated compounds are added to the polymeric material to be treated in an amount from 0.01% to 10% by weight, with respect to the weight of the polymeric material to be treated. Said amount is preferably from 0.05% to 4% w/w, or more preferably from 0.1% to 3% by weight, with respect to the weight of the polymeric material to be treated.

In order to simplify and improve the accuracy of unsaturated compound dosage, these compounds could be used in diluted form and/or as solutions.

The properties of the treated polymeric material may be controlled depending from the required performance, by varying the amounts, the concentration, the nature and the combinations of the free radical initiators and of the unsaturated compounds. The properties of the treated polymeric material depend also from the nature and the composition of the starting polymer material, and particularly from the nature and the amount of the primary polymers, the secondary polymers and the residual additives.

The process according to the present invention can be carried out in any conventionally known device that is suited to the task. Preferred equipment consists in a heated chamber and a stirring device. Mixing can be carried out in the presence of air or inert atmosphere. Typical apparatus used are extruders, kneaders, mixers and injection molding machines. Particularly preferred equipment are co-rotating and counter-rotating twin-screw extruders, single-screw extruders, ring extruders, planetary gear extruders, co-kneaders and injection molding machines.

Pure or diluted free radical initiators, pure or diluted unsaturated compound and optionally other additives can be separately premixed with the polymer material to be modified, at ambient temperature or at elevated temperatures. The polymeric material to be treated added with the above compounds is then melted and processed preferably at a temperature of from 120°C to 300°C, more preferably from 145°C to 265°C. The temperature is mainly selected on the basis of the properties of the starting material and of the reactive compounds which are added. In another embodiment the free radical initiator and the unsaturated compound can be introduced into a mixing device, preferably an extruder, wherein the polymer compound is already present or is fed simultaneously. Other additives can be added at the same time or in other addition steps.

The reaction time necessary to obtain the desired modification in the polymeric material mainly depends from the temperature, the type of mixing equipment used and from the initial chemical composition of the polymeric material. Preferably this time period is from 10 seconds to 45 minutes, more preferably from 15 seconds to 15 minutes.

Another possible process option is to introduce the free radical initiator and the unsaturated compounds as well as other additives by means of separated masterbatches or combi-batches (multifunctional masterbatches). The term "masterbatch", of common use in the art, refers to a concentrate of additives or other substances in a plastic base. These concentrates can be produced with a polymer matrix which has the same composition of the polymeric material to be modified. The reactive ingredient percentage in the masterbatch can be for example from 1% to 90% by weight, more preferably from 5% to 60% by weight. The masterbatches are produced and processed in a way that no premature decomposition or significant reactions of the free radical initiator and of the unsaturated compound occur. Starting ingredients for the production can be used in pure or diluted form. The obtained concentrates can then be added and mixed with the polymeric material to be treated.

The advantages of this two-steps process variant in two phases is that plastic masterbatches are generally easier to handle than pure chemical substances or not diluted in plastic, they guarantee more accurate dosing, together with a better dispersibility. A further advantage is that, in the case of a combi-batch, only one ingredient has to be added instead of two or more ingredients.

Multiple and separate additions of masterbatches and additives are also possible, in any order during the process or at the beginning of the process together with the polymeric material to be modified. All the homogenized ingredients should reach a temperature at which all the polymers to be modified are above melting or softening point. A suitable temperature range that may be used is from about 120°C to about 265°C or from about 165°C to about 220°C.

The following examples are provided in order to illustrate the present invention and cannot be intended as a limitation of the protecting scope as defined by the attached claims.

### EXAMPLES

### Products employed

Recycled post-industrial HDPE waste polymer, injection molding grade. Nominal MFI (Melt Flow Index) provided by the supplier is 8 gr/10' (190°C/2kg).

Polyethylene-rich fraction from urban post-consumer waste: selected, sorted, washed and pelletized by Montello SpA (Italy) and sold under trade name GS1 grade. Nominal composition range is: polyethylene 90-95%, polypropylene 5-10%, other polymers, residual additives, fillers, inert matter, organic matter (paper residues and/or food residues). Nominal MFI range provided by the supplier: 1-2 gr/10' (190°C/2kg).

Free radical initiator: 2,5-dimethyl-2,5-di(tert-butylperoxy)hexane (DTBPH, commercially available as Luperox 101 by Arkema).

Unsaturated functional compounds: maleic anhydride (MAH); 4,4'-Bismaleimidodiphenylmethane (commercially available as Matrimid 5292A by Huntsman).

### Mixing equipment and operating procedure.

All the materials characterized in the following examples were prepared in a DSM Xplore counter-rotating conical twin-screw laboratory extruder. Polymer compounds and ingredients were mixed for a total time of 2 minutes at 50 rpm. The amounts of the free radical initiator and of the unsaturated compound are calculated on the basis of the weight of the polymeric material. The following temperature profile was maintained: 175°C at the feeding zone, 185°C at the melting zone and 195°C at the melt metering zone. The resulting thermoplastic polymer compounds, modified according to the present invention, were then injection molded to obtain samples for characterizations. Tensile strength, elongation and elastic modulus at yield were determined by ISO 527, notched Izod impact by ISO 180, melt flow index by ISO 1133.
EXAMPLE 1 - Base polymer mix GS1 was used. 2% by weight of MAH and 4 mmol/kg of DTBPH were introduced.
EXAMPLE 2 - Base polymer mix GS1 was used. 0.37% by weight of Matrimid 5292A and 4 mmol/kg of DTBPH were introduced.
COMPARATIVE 1 - Only base polymer mix GS1 was introduced into the mixer and mixed for the same time as Examples 1 and 2.

**Table 1**

| | | Example 1 | Example 2 | Comparative 1 |
|---|---|---|---|---|
| Polymer | | GS1 | GS1 | GS1 |
| DTBPH | mmol/kg | 4 | 4 | 0 |
| Maleic Anhydride (MAH) | % (w/w) | 2 | 0 | 0 |
| Matrimid 5292 A | % (w/w) | 0 | 0.37 | 0 |
| MFI (190°C/ 5kg) | g/10' | 0.13 | 0.07 | 3.22 |
| Impact (notched Izod) | KJ/m2 | 38,2 | 31.7 | 36.5 |
| Tensile strength (at yield) | MPa | 23 | 16.3 | 11.8 |
| Elongation (at yield) | % | 11 | 9 | 5 |
| Elastic Modulus (at yield) | MPa | 667 | 501 | 455 |

The materials produced following Examples 1 and 2, compared to Comparative 1, show lower MFI and consequently a molecular weight increase and an improved melt strength.
Moreover, impact resistance is comparable while mechanical properties (tensile strength, elongation, elastic modulus) at yield are greatly improved versus Comparative 1.
EXAMPLE 3 - Base polymer recycled HDPE was used. 2% by weight of MAH and 4 mmol/kg of DTBPH were introduced.
EXAMPLE 4 - Base polymer recycled HDPE was used. 0.37% by weight of Matrimid 5292A and 4 mmol/kg of DTBPH were introduced.
COMPARATIVE 2 - Only base polymer recycled HDPE was introduced into the mixer and mixed for the same time as Examples 3 and 4.

**Table 2**

| | | Example 3 | Example 4 | Comparative 2 |
|---|---|---|---|---|
| Polymer | | Recycled HDPE | Recycled HDPE | Recycled HDPE |
| DTBPH | mmol/kg | 4 | 4 | 0 |
| Maleic Anhydride (MAH) | % (w/w) | 2 | 0 | 0 |
| Matrimid 5292 A | % (w/w) | 0 | 0.37 | 0 |
| MFI (190°C/ 5kg) | g/10' | 0.13 | 2.4 | 14 |
| Impact (notched Izod) | KJ/m2 | 23.9 | 18 | 8.3 |
| Tensile strength (at yield) | MPa | 22.3 | 22 | 17.8 |
| Elongation (at yield) | % | 9 | 12 | 9 |
| Elastic Modulus (at yield) | MPa | 1122 | 1022 | 1016 |

The materials produced following Examples 3 and 4, compared to Comparative 2, show lower MFI and consequently a molecular weight increase and an improved melt strength.

Moreover, mechanical properties (tensile strength, elongation, elastic modulus) at yield and impact resistance are greatly improved versus Comparative 2.

Although the invention has been described in conjunction with specific embodiments, it is evident that many alternatives and variations will be apparent to those skilled in the art without departing from the scope of this invention.

## Claims

1. Process for recycling a thermoplastic polymeric waste material by reacting said thermoplastic polymeric waste material in a molten state with an organic compound having one or more carbon-carbon double bonds in the presence of a free radical initiator;
wherein the waste thermoplastic polymer material comprises a primary polymer, one or more secondary polymers and residual additives in which:
the primary polymer is present in an amount from 50% by weight to 99.9% in weight;
said one or more secondary polymers are present in an amount from 0.1% by weight to 50% in weight;
the residual additives are present in an amount from 0.1 ppm (parts per million) to 10% by weight;
the percentages by weight being expressed with respect to the total weight of the primary and secondary polymers;
wherein the primary polymer is selected from monoolefin and/or diolefin polymers;
wherein said one or more secondary polymers optionally comprise crosslinked polymer materials in an amount not greater than 15%;
wherein the organic compound having one or more carbon-carbon double bonds is added to the waste thermoplastic polymer material in an amount from 0.01% to 10% by weight, with respect to the weight of the polymeric material to be treated.

2. Process according to claim 1, wherein said one or more secondary polymers comprises crosslinked polymer materials in an amount not greater than 5%.

3. Process according to anyone of the preceding claims, wherein the waste thermoplastic polymer material comprises from 80% to 95% of polyethylene, from 5% to 20% of polypropylene, and from 1 ppm to 5% of residual additives, with respect to the total weight of the polymers.

4. Process according to anyone of claims 1 to 2, wherein the waste thermoplastic polymer material comprises from 80% to 95% of polyethylene, from 5% to 20% of polypropylene, from 1 ppm to 2.5% of PVC or of halogen-containing substances, and from 1 ppm to 5% of residual additives, with respect to the total weight of the polymers.

5. Process according to anyone of the preceding claims, wherein the free radical initiator is selected from: organic or inorganic peroxides, azo-bis compounds.

6. Process according to anyone of the preceding claims, wherein the free radical initiator is added to the waste thermoplastic polymer material in an amount from 0.03 mmol/kg to 30 mmol/kg, with respect to the total weight of the primary and secondary polymers.

7. Process according to anyone of the preceding claims, wherein the organic compound having one or more carbon-carbon double bonds is mono-unsaturated or poly-unsaturated.

8. Process according to anyone of the preceding claims, wherein the organic compound having one or more carbon-carbon double bonds is selected from:
(1) carboxylic acids having from 2 to 20 carbon atoms and containing one ethylenic unsaturation, or derivatives thereof, such as esters, anhydrides, amides, imides, salts;
(2) vinyl esters of saturated carboxylic acids, for example: vinyl acetate, vinyl propionate;
(3) unsaturated epoxy compounds, for example: glycidylesters or aliphatic glycidylethers; glycidylesters or alicyclic glycidylethers;
(4) aliphatic, aromatic or mixed aliphatic-aromatic monoolefins, optionally containing hetero-atoms, or primary or secondary functional groups such as alcohols, ketones, aldehydes, ethers, esters, amines and others.

9. Process according to anyone of the preceding claims, wherein the reaction is carried out at a temperature of from 120°C to 300°C, preferably from 145°C to 245°C.

10. Process according to anyone of the preceding claims, wherein the reaction is carried out for a time period from 10 seconds to 45 minutes, preferably from 15 seconds to 15 minutes.

## Patentansprüche

1. Recycling-Verfahren für thermoplastische Polymerabfallstoffe durch Umsetzen der thermoplastischen Polymerabfallstoffe im geschmolzenen Zustand mit einer organischen Verbindung, die eine oder mehrere Kohlenstoff-Kohlenstoff-Doppelbindungen aufweist, in Anwesenheit eines Radikalstarters;
wobei die thermoplastische Polymerabfallstoffe ein Hauptpolymer, ein oder mehrere Nebenpolymere und Restadditive umfassen, in denen:
das Hauptpolymer in einer Menge von 50 Gew.-% bis 99,9 Gew.-% vorhanden ist;
das eine oder die mehreren Nebenpolymere in einer Menge von 0,1 Gew.-% bis 50 Gew.-% vorhanden sind;
die Restadditive in einer Menge von 0,1 ppm (Teile pro Million) bis 10 Gew.-% vorhanden sind;
wobei die Gewichtsprozente in Bezug auf das Gesamtgewicht der Haupt- und Nebenpolymere angegeben werden;
wobei das Hauptpolymer aus Monoolefin- und/oder Diolefinpolymeren ausgewählt wird;
wobei das eine oder die mehreren Nebenpolymere gegebenenfalls vernetzte Polymerstoffe in einer Menge von nicht mehr als 15 % umfassen;
wobei die organische Verbindung, die eine oder mehrere Kohlenstoff-Kohlenstoff-Doppelbindungen aufweist, den thermoplastischen Polymerabfallstoffen in einer Menge von 0,01 Gew.-% bis 10 Gew.-%, in Bezug auf das Gewicht des zu behandelnden Polymerstoffes, hinzugefügt wird.

2. Verfahren gemäß Anspruch 1, wobei das eine oder die mehreren Nebenpolymere vernetzte Polymerstoffe in einer Menge von nicht mehr als 5 % umfassen.

3. Verfahren gemäß einem der vorhergehenden Ansprüche, wobei die thermoplastischen Polymerabfallstoffe 80 % bis 95 % Polyethylen, 5 % bis 20 % Polypropylen und 1 ppm bis 5 % Restadditive, in Bezug auf das Gesamtgewicht der Polymere, umfassen.

4. Verfahren gemäß einem der Ansprüche 1 bis 2, wobei die thermoplastischen Polymerabfallstoffe 80% bis 95 % Polyethylen, 5% bis 20 % Polypropylen, 1 ppm bis 2,5 % PVC oder halogenhaltige Substanzen und 1 ppm bis 5 % Restadditive, in Bezug auf das Gesamtgewicht der Polymere, umfassen.

5. Verfahren gemäß einem der vorhergehenden Ansprüche, wobei der Radikalstarter aus Folgendem ausgewählt wird: organischen oder anorganischen Peroxiden, Azo-Bis-Verbindungen.

6. Verfahren gemäß einem der vorhergehenden Ansprüche, wobei der Radikalstarter den thermoplastischen Polymerabfallstoffen in einer Menge von 0,03 mmol/kg bis 30 mmol/kg, in Bezug auf das Gesamtgewicht der Haupt- und Nebenpolymere, hinzugefügt wird.

7. Verfahren gemäß einem der vorhergehenden Ansprüche, wobei die organische Verbindung, die eine oder mehrere Kohlenstoff-Kohlenstoff-Doppelbindungen aufweist, einfach ungesättigt oder mehrfach ungesättigt ist.

8. Verfahren gemäß einem der vorhergehenden Ansprüche, wobei die organische Verbindung, die eine oder mehrere Kohlenstoff-Kohlenstoff-Doppelbindungen aufweist, aus Folgendem ausgewählt wird:
(1) Carbonsäuren, die 2 bis 20 Kohlenstoffatome aufweisen und eine ethylenische Ungesättigtheit enthalten, oder Derivate davon, wie Ester, Anhydride, Amide, Imide, Salze;
(2) Vinylester von gesättigten Carbonsäuren, zum Beispiel: Vinylacetat, Vinylpropionat;
(3) ungesättigte Epoxyverbindungen, zum Beispiel: Glycidylester oder aliphatische Glycidylether; Glycidylester oder alicyclische Glycidylether;
(4) aliphatische, aromatische oder gemischt aliphatisch-aromatische Monoolefine, enthaltend gegebenenfalls Heteroatome oder funktionelle Haupt- oder Nebengruppen, wie Alkohole, Ketone, Aldehyde, Ether, Ester, Amine und andere.

9. Verfahren gemäß einem der vorhergehenden Ansprüche, wobei die Umsetzung bei einer Temperatur von 120 °C bis 300 °C, vorzugsweise von 145 °C bis 245 °C, durchgeführt wird.

10. Verfahren gemäß einem der vorhergehenden Ansprüche, wobei die Umsetzung über eine Zeitspanne von 10 Sekunden bis 45 Minuten, vorzugsweise von 15 Sekunden bis 15 Minuten, durchgeführt wird.

## Revendications

1. Procédé de recyclage d'un matériau polymère thermoplastique résiduaire par mise en réaction dudit matériau polymère thermoplastique résiduaire dans un état fondu avec un composé organique possédant une ou plusieurs doubles liaisons carbone-carbone en présence d'un amorceur radicalaire;
dans lequel le matériau polymère thermoplastique résiduaire comprend un polymère primaire, un ou plusieurs polymères secondaires et des additifs résiduels où :
le polymère primaire est présent dans une proportion de 50 % en poids à 99,9 % en poids ;
lesdits un ou plusieurs polymères secondaires sont présents dans une proportion de 0,1 % en poids à 50 % en poids ;
les additifs résiduels sont présents dans une proportion de 0,1 ppm (parties par million) à 10 % en poids ;
les pourcentages en poids étant exprimés par rapport au poids total des polymères primaire et secondaires ;
dans lequel le polymère primaire est sélectionné parmi des polymères mono-oléfiniques et/ou dioléfiniques ;
dans lequel lesdits un ou plusieurs polymères secondaires comprennent éventuellement des matériaux polymères réticulés dans une proportion non supérieure à 15 % ;
dans lequel le composé organique possédant une ou plusieurs doubles liaisons carbone-carbone est ajouté au matériau polymère thermoplastique résiduaire dans une proportion de 0,01 % à 10 % en poids, par rapport au poids du matériau polymère à traiter.

2. Procédé selon la revendication 1, dans lequel lesdits un ou plusieurs polymères secondaires comprennent des matériaux polymères réticulés dans une proportion non supérieure à 5 %.

3. Procédé selon l'une quelconque des revendications précédentes, dans lequel le matériau polymère thermoplastique résiduaire comprend 80 % à 95 % de polyéthylène, 5 % à 20 % de polypropylène, et 1 ppm à 5 % d'additifs résiduels, par rapport au poids total des polymères.

4. Procédé selon l'une quelconque des revendications 1 à 2, dans lequel le matériau polymère thermoplastique résiduaire comprend 80 % à 95 % de polyéthylène, 5 % à 20 % de polypropylène, 1 ppm à 2,5 % de PVC ou de substances halogénées, et 1 ppm à 5 % d'additifs résiduels, par rapport au poids total des polymères.

5. Procédé selon l'une quelconque des revendications précédentes, dans lequel l'amorceur radicalaire est sélectionné parmi : des peroxydes organiques ou inorganiques, des composés azo-bis.

6. Procédé selon l'une quelconque des revendications précédentes, dans lequel l'amorceur radicalaire est ajouté au matériau polymère thermoplastique résiduaire dans une proportion de 0,03 mmol/kg à 30 mmol/kg, par rapport au poids total des polymères primaire et secondaires.

7. Procédé selon l'une quelconque des revendications précédentes, dans lequel le composé organique possédant une ou plusieurs liaisons doubles carbone-carbone est mono-insaturé ou polyinsaturé.

8. Procédé selon l'une quelconque des revendications précédentes, dans lequel le composé organique possédant une ou plusieurs liaisons doubles carbone-carbone est sélectionné parmi :
(1) des acides carboxyliques possédant 2 à 20 atomes de carbone et contenant une insaturation éthylénique, ou des dérivés de ceux-ci, tels que des esters, des anhydrides, des amides, des imides, des sels ;
(2) des esters vinyliques d'acides carboxyliques saturés, par exemple : l'acétate de vinyle, le propionate de vinyle ;
(3) des composés époxy insaturés, par exemple : des glycidylesters ou des glycidyléthers aliphatiques ; des glycidylesters ou des glycidyléthers alicycliques ;
(4) des monooléfines aliphatiques, aromatiques ou aliphatiques-aromatiques, contenant éventuellement des hétéroatomes, ou des groupements fonctionnels primaires ou secondaires tels que des alcools, des cétones, des aldéhydes, des éthers, des esters, des amines et autres.

9. Procédé selon l'une quelconque des revendications précédentes, dans lequel la réaction est réalisée à une température de 120 °C à 300 °C, de préférence de 145 °C à 245 °C.

10. Procédé selon l'une quelconque des revendications précédentes, dans lequel la réaction est réalisée pendant un temps de 10 secondes à 45 minutes, de préférence de 15 secondes à 15 minutes.
